# EUROPEAN PATENT APPLICATION

(11) **EP 4 810 148 A1**
(43) Date of publication of application: **23.09.2026**
(21) Application number: 25164776.4
(22) Date of filing: 19.03.2025
(51) Int. Cl.: B01F 33/841, B01F 35/71, G01F 11/02, F04B 53/10

(54) **TINTING MACHINE**

(71) Applicant: Fast & Fluid Management B.V., 2171 KZ Sassenheim (NL)
(72) Inventor: van Koesveld, Robbert, 2171 KZ SASSENHEIM (NL)
(74) Representative: De Vries & Metman

(57) **Abstract**

Tinting machine (1) for tinting paints, comprising a plurality of dispense units (8), each dispense unit comprising a container (4), a pump (10) and a valve (11). The valve (11) comprises a valve housing (16) and a valve element (18), such as a semi-spherical ball valve, in the valve housing. The valve element (18) comprises a plurality of dispense channels (22A-C), including at least one micro-dispense channel (22C) having a smallest cross sectional area A < 1,5 mm2 over a length L < 5 mm.

## Description

The invention relates to a tinting machine for tinting paints, comprising a plurality of dispense units, each dispense unit comprising a container, a pump and a valve. The valves typically comprise a valve housing and a valve element movable within the valve housing between at least a suction position connecting the pump to the container, and a pressure position, connecting the pump to an outlet for dispense.

WO 2003/083334 discloses a valve with a rotatable valve element having an axial channel and a plurality of radial channels between the axial channel and the circumferential outer surface of the valve element. The radial channels have different diameters and are selectively aligned with a dispense opening of the valve housing. Radial channels with larger openings are used for faster dispensing of regular tinting amounts, while the radial channels with smaller diameter are used for precision dispensing of very small amounts.

The smallest dispenses of tinting machines are typically less than 0,05 ml, which can for example be used for preparing a test sample. Dispenses of less than about 0,013 ml are hitherto not possible since in that case the dispensed tinting paste remains on the nozzle. The margin of error with these smallest dispenses of less than 0,05 ml is large and can lead to significant deviations of the mixed paint colour.

It is an object of the invention to provide a tinting machine allowing improved accuracy of dispenses of less than 0,05 mm.

The object of the invention is achieved with a tinting machine, wherein the valve of one or more of the dispense units comprises a valve element in the valve housing, the valve element comprising a plurality of dispense channels, at least one micro-dispense channel having a smallest cross sectional area A < 1,5 mm2 over a length L < 5 mm.

Notwithstanding microfluidic physics, such as capillary effects, it was surprisingly found that a sample dispense with such a micro-dispense channel can be carried out with a significantly lower margin of error than a dispense of the same volume dispensed via the smallest channels of prior art tinting systems. It was also found that smaller dispenses of even less than 0.013 ml could be dispensed without sticking to the nozzle.

Particularly good results are achieved if the ratio of the smallest cross sectional area A in mm2 and the length L in mm is larger than 0.15 mm.

The length L is not necessarily the total length of the micro-dispense channel, but rather the length of a section of the channel having a cross sectional area A < 1,5 mm2. For example, the channel may have a stepped configuration with a constricted section having the cross sectional area A with the length L, or the channel maybe wholly or partly conical.

The valve can for example be a rotational valve, such as a ball valve or cylindrical valve, the valve element having an axial pump channel connecting to the pump, the dispense channels being radial channels between the pump channel and the outer surface of the rotating valve element. By rotating the valve element, a selected dispense channel can be aligned with an outlet opening in the valve housing to allow dispense of a tinting paste, or with a suction channel connecting to the container to allow withdrawal of a tinting paste from the container.

With such a valve, at least one of the dispense channels in the valve element, in particular the largest dispense channel, may have a diameter or width larger than the wall thickness of the pump channel.

Reducing the wall thickness of the pump channel helps to obtain dispense channels of a desired short length. One way of reducing the wall thickness of the pump channel, is to provide the pump channel of the ball valve or cylindrical valve with an inlet with a width or diameter which is less than the diameter of the pump channel.

In a specific embodiment, the valve element comprises a pump channel that is at least partly spherical. This helps to reduce the length of the radial dispense channels, including the micro-dispense channel.

The radial dispense channels will typically be in the same plane, so that simple rotation of the valve can position each one of the radial dispense channels in line with the same outlet of the valve housing.

In a particular example, the angular distance between adjacent dispense channels relative to a rotational axis of the valve element is below 90 degrees, e.g., about 40 - 60 degrees.

In an alternative arrangement, the valve element can be cylindrical with a central axial pump channel and radial dispense channels. In such an embodiment, two of the dispense channels can be parallel, e.g., coaxial, having outlets at diametrically opposite sides of the valve element. Optionally, the two aligned dispense channels include the micro-dispense channel.

The invention is further explained with reference to the accompanying drawings showing exemplary embodiments.
Figure 1A: shows a dispenser in perspective view;
Figure 1B: shows the dispenser of Figure 1A without a cover lid;
Figure 2: shows a container of the dispenser of Figure 1 in longitudinal cross section;
Figures 3A-3B: show a pump-valve assembly at the end of a sample dispense stroke in two different longitudinal cross sections.
Figure 4: shows the valve element in cross section;
Figure 5: shows the valve element separately in perspective view.

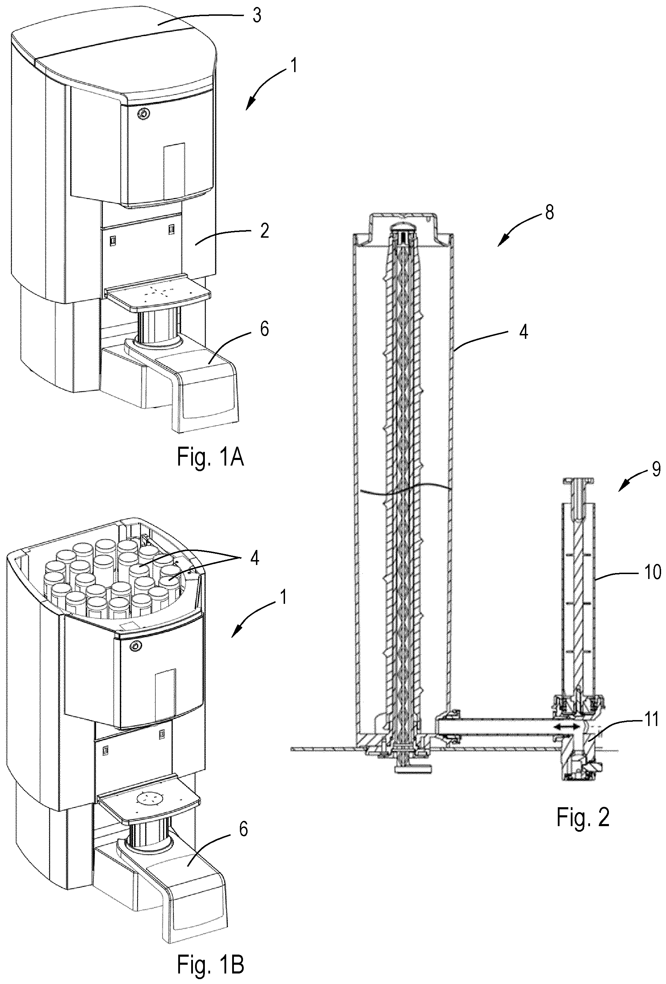

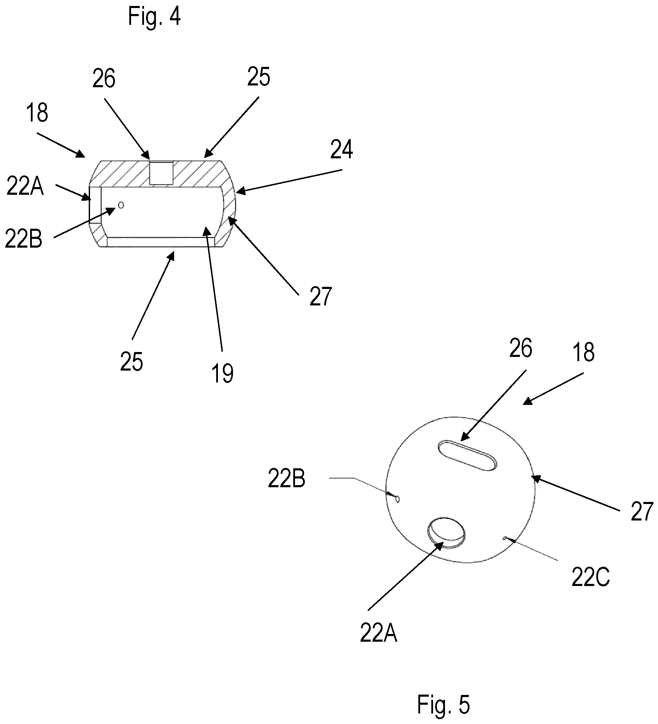

Figures 1A and 1B show an exemplary embodiment of a tinting machine 1 for mixing and dispensing paint products. The tinting machine 1 has a dispenser housing 2 with a cover lid 3. Figure 1B shows the tinting machine 1 without the cover lid 3, in order to show the internals of the tinting machine 1. The dispenser housing 2 of the tinting machine 1 encases containers or canisters 4 arranged in concentric circular arrays. Each container 4 holds a tinting paste of a specific colour. The containers 4 are placed in an upright position on a turntable 5 (see Figures 2 and 5) which is coaxial with the circular arrays of containers 4. The tinting machine 1 further comprises a platform 6 for positioning a paint can or similar receptacle.

The tinting machine 1 comprises a control unit with a user interface, such as a touch screen, in communication with the control unit enabling an operator or user to input a desired paint colour. When a user inputs a desired paint colour, the control unit determines a paint formulation matching the selected paint colour, e.g., by selecting the paint formulation from a database. The determined paint formulation consists of a tinting paste or of a mixture of tinting pastes available in the respective containers 4 of the tinting machine 1, and optionally a base paint. The control unit controls rotation of the turntable to sequentially position the containers 4 containing the required tinting pastes in a dispensing position above the paint can on the platform 6 and control dispensing of the tinting pastes one by one in accordance with the paint formulation.

Each container 4 is part of a dispense unit 8 shown in Figure 2 in longitudinal cross section. The dispense unit 8 comprises the container 4, and a pump-valve assembly 9, with a piston pump 10 and a three way valve 11.

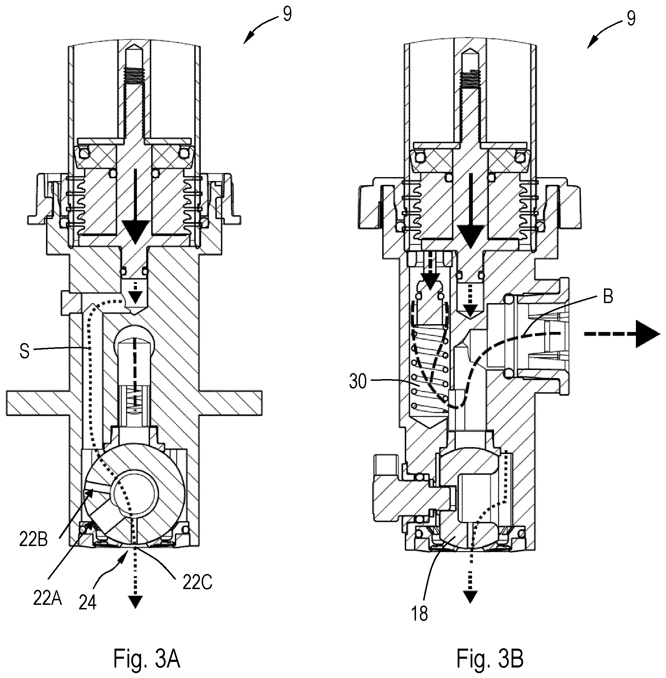

Figure 3A shows the pump-valve assembly 9 in a longitudinal cross section in a plane under right angles with the view plane in Figure 2. Figure 3B shows the same pump-valve assembly 9 in a longitudinal cross section in a plane under right angles with the cross section of Figure 3A, hence in a plane under parallel with the view plane in Figure 2.

The piston pump 10 comprises a pump cylinder 12 encasing a pump chamber 13 and a piston 14 reciprocating within the pump chamber 13 with a sliding fit between an extended position and an inward position.

The valve 11 comprises a valve housing 16 with an inner valve chamber 17 and a ball valve 18 mounted in the valve chamber 17 with a rotational slide fit to allow rotation about a rotational axis X.

As particularly shown in Figure 3B, the ball valve 18 has a central axial pump channel 19 with an open end 20 at one side of the ball valve 18 and blind end with an end wall 21 at the opposite side of the ball valve 18. The ball valve 18 has a set of radial channels 22A, 22B, 22C extending from the axial pump channel 19 to the outer surface of the ball valve 18. In the shown exemplary embodiment, the ball valve 18 has three radial channels 22A, 22B, 22C of different diameter (see Figure 3A). The radial channels have a length of about 2 mm. The radial channels 22A, 22B, 22C can selectively be used for different dispense speeds or accuracies or for rheological profiles of the tinting pastes to be dispensed.

The smallest one of the radial channels is a micro-dispense channel 22C with a diameter of 0,65 mm. This micro-dispense channel can be used for precision dispenses of small amounts, e.g., of less than 0,05 ml, for example to make a small sample of a desired paint colour.

The largest one of the radial channels 22A can also be aligned with a channel connecting to the container, so as to connect the piston pump 10 to the container 4 for withdrawal of tinting paste from the container 4 by a suction stroke of the piston pump 10.

The end wall 21 of the axial channel 19 is connected to a rotatable operating element 23 that is accessible for an actuator (not shown) from the outside of the valve housing 16 to rotate the ball valve 18 into a desired position.

Figures 4 and 5 show the ball valve 18 as a separate part. The ball valve 18 has a partly spherical body 24 with two parallel, opposite flattened sides 25. One of the flattened sides 25 has a central opening 26 forming the entrance of the pump channel 19. The central opening 26 has a width which is substantially less than the diameter of the pump channel 19. The opposite flat side is open. The spherical body 24 has a partly spherical outer wall 27 of even thickness, enclosing the partly spherical pump channel 19.

A comparative test was carried out using a HA480 paint dispenser of Fast & Fluid Management BV in Sassenheim, the Netherlands. The HA480 dispenser is a tinting machine with a plurality of dispense units, each having a piston pump driven by a stepper motor.

In a first series of 70 dispenses, 0,012 ml of an aqueous white red oxide tinting paste were carried out using the smallest dispense channel of the regular valve used in this type of dispenser. This smallest dispense channel had a diameter of 1,4 mm and a channel length of 6,5 mm. Each dispense took 9 steps of the stepper motor. The average volume the dispensed amounts was 0,012 ml. The dispense volumes ranged from 0,007 - 0,016 ml, while 50 % of the dispense volumes was between 0,01 and 0,013 ml. Then, the same number of 0,012 ml dispenses were carried out using the same dispenser, but now via the smallest dispense channel of a valve according to the invention, having a diameter of 0,65 mm and a channel length of only 2 mm. With this 0,65 mm channel, each 0,012 ml dispense took 12 steps of the stepper motor. The average volume the dispensed amounts was 0,012 ml. The dispense volumes ranged from 0,009 - 0,015 ml, while 50 % of the dispense volumes was between 0,011 and 0,013 ml. This shows that the spread of the dispense volumes, and therefore the margin of error, is significantly smaller for the 0,6 mm channel than for the 1,4 mm channel.

Using the valve with the 1,4 mm dispense channel, a minimum of 9 steps were required to ensure a minimum dosage. This minimum dosage had a volume of 0,013 ml. With a lower number of steps, a drop of the tinting paste remained on the nozzle. Using the valve with the 0,6 mm dispense channel with nine steps of the stepper motor, dispenses of 0,006 ml were possible without sticking to the nozzle.

## Claims

1. Tinting machine (1) for tinting paints, comprising a plurality of dispense units (8), each dispense unit comprising a container (4), a pump (10) and a valve (11);
wherein the valve (10) of one or more of the dispense units (8) comprises a valve housing (16) and a valve element (18) in the valve housing, the valve element comprising a plurality of dispense channels (22A-C), including at least one micro-dispense channel (22C) having a smallest cross sectional area A < 1,5 mm2 over a length L < 5 mm.

2. Tinting machine according to claim 1, wherein the ratio of A : L > 0,15 mm.

3. Tinting machine according to claim 1 or 2, wherein the valve element (18) comprises a pump channel (19) communicating with the pump, and wherein at least one of the dispense channels (22A, 22B, 22C) has a diameter larger than the wall thickness of the pump channel (19).

4. Tinting machine according to claims 3, wherein the pump channel (19) is at least partly spherical.

5. Tinting machine according to any one of the preceding claims, wherein the angular distance between adjacent dispense channels (22A, 22B, 22C) relative to a rotational axis of the valve element (18) is below 90 degrees, e.g., about 40 - 60 degrees.

6. Tinting machine according to any one of the preceding claims, wherein at least two of the dispense channels (22A, 22B, 22C) are parallel, e.g., coaxial, having outlets at diametrically opposite sides of the valve element (18).

7. Tinting machine according to claim 6, wherein the two aligned dispense channels (22A, 22B, 22C) include the micro-dispense channel (22C0.

8. Tinting machine according to any one of the preceding claims, wherein the pump channel (19) has an inlet (26) with a width which is less than the diameter of the pump channel (19).

9. Tinting machine according to any one of the preceding claims wherein the micro-dispense channel (22C) is at least partly conical in longitudinal cross section.
